# EUROPEAN PATENT SPECIFICATION

(11) **EP 2 301 395 B1**
(45) Date of publication and mention of the grant of the patent: **31.08.2011**
(21) Application number: 09425372.1
(22) Date of filing: 25.09.2009
(51) Int. Cl.: A47J 31/36

(54) **Device for preparing infused beverages**
Verfahren zur Herstellung von Brühgetränken
Dispositif pour la préparation de boissons infusées

(43) Date of publication of application: 30.03.2011
(73) Proprietor: F.A.S. International S.p.A., 36015 Schio (Vicenza) (IT)
(72) Inventor: Morabito, Giuseppe, 36014 Santorso (VI) (IT)
(74) Representative: Perani, Aurelio

(56) References cited:
- WO-A-2005/058111
- FR-A- 2 723 524

## Description

The present invention refers to a device for preparing infused beverages, in particular hot beverages like, for example, espresso coffee.

It is known to make machines for making infused beverages starting from a capsule containing the product, which in use is passed through by water to make the drink.

A machine of this kind is known by EP1659547.

According to this prior art, the capsules are vertically fed by the force of gravity to an infusion station, which comprises two horizontally mobile jaws.

A first jaw of the infusion station is moved through a suitable cam actuation, whereas the second jaw is pushed by a spring in the direction of the first jaw.

In a first configuration, the first jaw is in its standby position away from the second jaw so as to allow the capsule to arrive between the two jaws.

In a second operative configuration, the first jaw is pushed against the second jaw, with the capsule in between them. In this condition the infusion occurs, after which the first jaw is taken back to its standby position, and the capsule is discharged from the infusion station.

The machine according to EP 1659547 also comprises stopping means, intended to stop the capsule falling to the infusion station between the two jaws.

These stopping means comprise two arms mounted in a rotatable manner on a fixed frame of the machine. Such arms are pushed by a spring towards a stopping position of the capsule, such as to interfere with the arrival trajectory of the dropped capsule. Once the infusion step is over, the used capsule is discharged only when the following new capsule has arrived, which pushes the two stopping arms with its weight to rotate against the action of the respective springs towards a position in which they no longer withhold the used capsule.

This system leads to a series of drawbacks.

Particularly, the machine has a certain complexity, due to the presence of rotatable arms, associated with respective return springs. Moreover, the strength of the springs must be calibrated with a certain precision so it is be able to withhold one capsule, but not two capsules stacked one on top of the other. A fault or a variation in behaviour of the spring over time can lead to malfunctioning of the machine, thus requiring a maintenance operation.

Moreover, the used wet capsule remains inside the infusion station without being evacuated until a new capsule is sent to prepare another infused beverage.

This cause the machine to have low level of hygiene.

A further machine is known from WO-A-2005/058111, disclosing a device according to the preamble of independent claim 1.

In view of the state of the art described, the purpose of the present invention is that of providing a device for preparing infused beverages which allows the capsules to be reliably fed to the infusion station.

A further purpose is that of providing a device having a simple and cost-effective structure, with a limited number of actuations and mobile components.

Another purpose of the present invention is that of providing a device which allows the capsules to be discharged safely and reliably after the infusion.

Another purpose of the invention is to provide a device which allows there to be an adequate level of hygiene.

In accordance with the present invention, such purposes are achieved with a device for making infused beverages suitable for extracting the beverage from a capsule containing the infusion product, comprising:
- means for feeding capsules to a channel suitable for conveying the capsules inside of it by the force of gravity,
- a first and a second jaw reciprocally mobile one another in a direction transverse to the channel,
- motor means suitable for moving the first jaw between a first standby position far from the second jaw so as to allow a capsule conveyed by the channel to arrive between the two jaws and a second operative position in which the first jaw is pressed against the second jaw with the capsule positioned between the jaws,
- means for stopping the capsule arriving from the channel in a position between the two jaws when the first jaw is in its standby position,
- means for making the infusion liquid flow through the capsule when the first jaw is in the operative position, characterized in that the first jaw is mobile through said motor means towards a third position for discharging the capsule, said means for stopping the capsule comprising at least one stopping element fixedly connected to the first jaw so that, when the first jaw is in the first standby position, the stopping element is positioned to intercept a capsule arriving from the channel and, when the first jaw is brought to the third discharge position, the stopping element is, at least partially, moved away from the channel to allow the capsule to be evacuated.

The characteristics and the advantages of the present invention shall become clear from the following detailed description of a practical embodiment, given as an example but not for limiting purposes with reference to the attached drawings, in which:
- figure 1 shows an overall perspective view of a device according to the invention,
- figure 2 shows a detail view of an infusion station of the device,
- figure 2a shows a view which is analogous to the previous one in which some parts of the device have been removed in order to show the capsule conveying channel,
- figure 3 shows a section view according to the plane A-A indicated in figure 2,
- figure 4 shows a section view of the device in which the jaws of the infusion station are in a standby condition of the capsule right before the infusion,
- figure 5 shows an analogous view to the previous one where the jaws are in an operative infusion position,
- figure 6 shows a view which is analogous to the previous one where the jaws are in a discharge position of the capsule after the infusion,
- figure 7 shows a view of part of the device in which the lever for expelling the capsule is represented in its resting position,
- figure 8 shows a view which is analogous to the previous one where the lever is represented in an operative position.

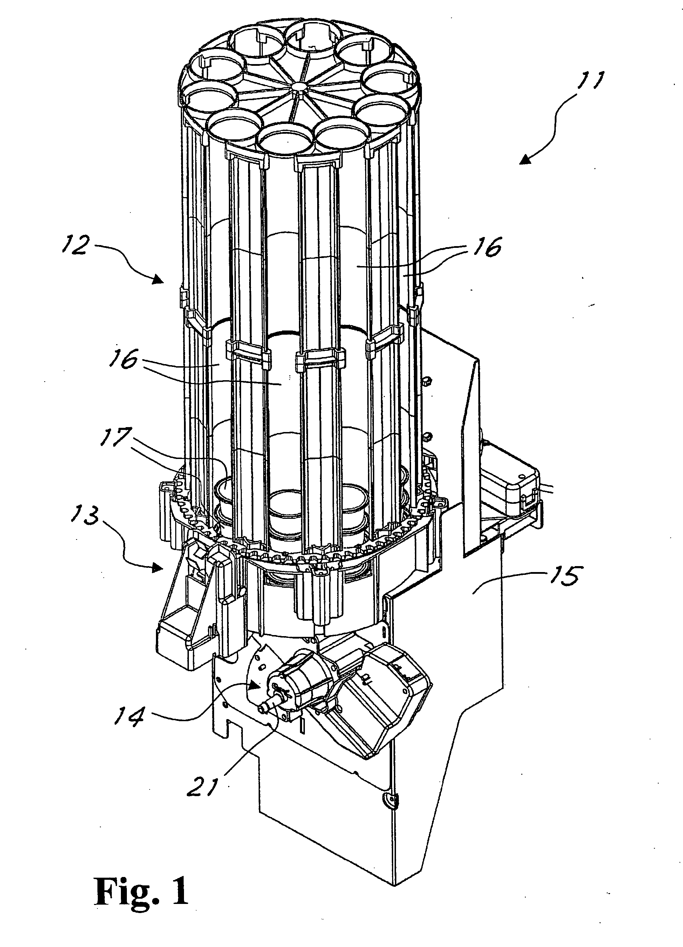

Figure 1 shows a device 11 for preparing infused beverages, suitable for extracting the beverage from a rigid capsule containing the infusion product. The device 11 can prepare, for example, hot beverages like espresso coffee.

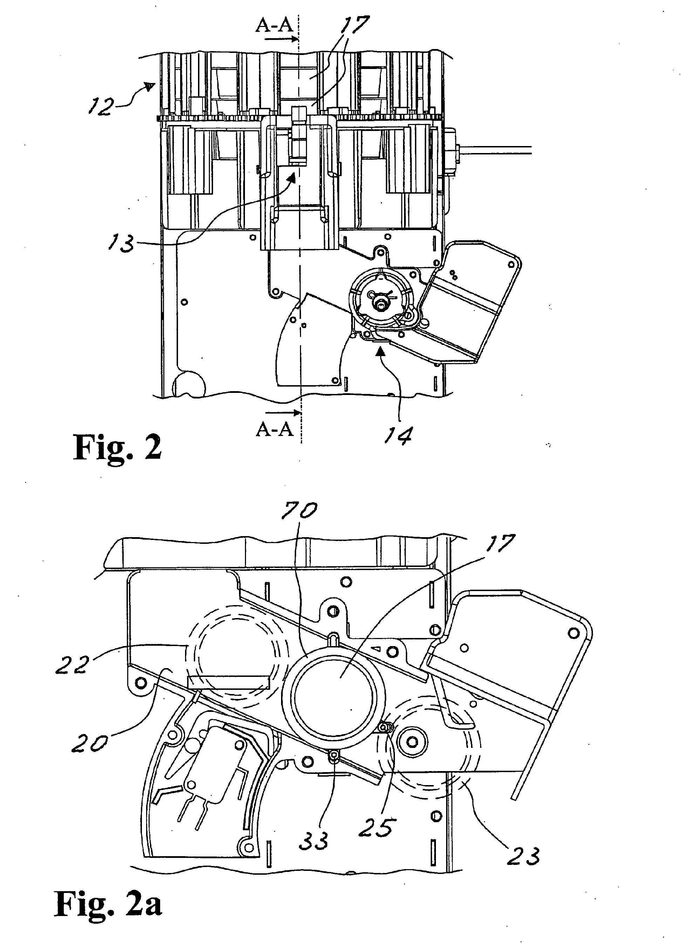

The device 11 comprises a storage compartment 12 for containing the capsules 17 intended to be used to prepare the beverages. Preferably, the storage compartment 12 is of the rotary drum type, with a vertical rotation axis, and has a plurality of vertically extending seats 16 which are suitable for storing columns of capsules 17. The seats 16 are arranged on the outer periphery of the storage compartment 12, and are shaped in a way such as to keep the capsules 17 stacked with a vertically oriented axis, in use. The capsules 17 generically have a cylindrical shape, preferably slightly tapered, and have a peripheral flange 70 at an upper face opposite the tapering (see fig. 2a).

The storage compartment 12 is mounted in a rotatable manner on a fixed frame 15 of the device, and is set into rotation to bring a desired column of capsules 17 to the feeding means 13, arranged at the base of the storage compartment 12.

The means 13 have the function of feeding the capsules 17 to the infusion means 14, arranged below the storage compartment 12.

In particular, the means 13 are suitable for feeding a channel 20 (represented in figure 2a) suitable for conveying the dropped capsules inside it, by gravity.

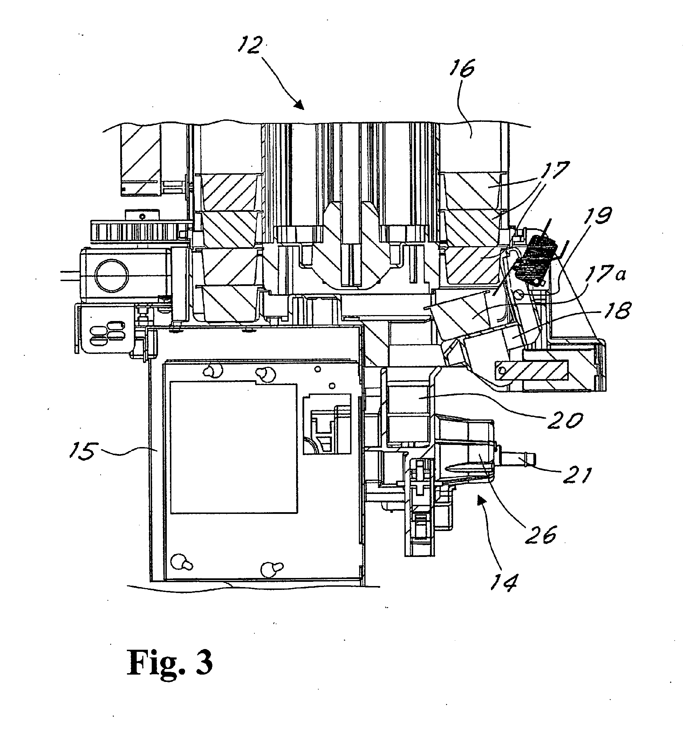

The means 13 for feeding the capsules preferably comprise a lever 18 hinged to the fixed frame of the device with a horizontal axis pivot 19 (fig. 3). The lever 18 is normally in a horizontal position to prevent the capsules 17 from falling, and it can be moved downwards through a suitable actuation so as to allow a capsule 17a to drop into the underlying channel 20. Thanks to the specific inclination of the lever 18 in the lowered feeding position, the axis of the capsule 17 is rotated from vertical to horizontal during its fall from the storage compartment 12 towards the channel 20.

The channel 20 is preferably orientated obliquely. The channel 20 has a cross section such that the capsules 17 are conveyed inside of it by the force of gravity with their axis oriented in an almost horizontal position.

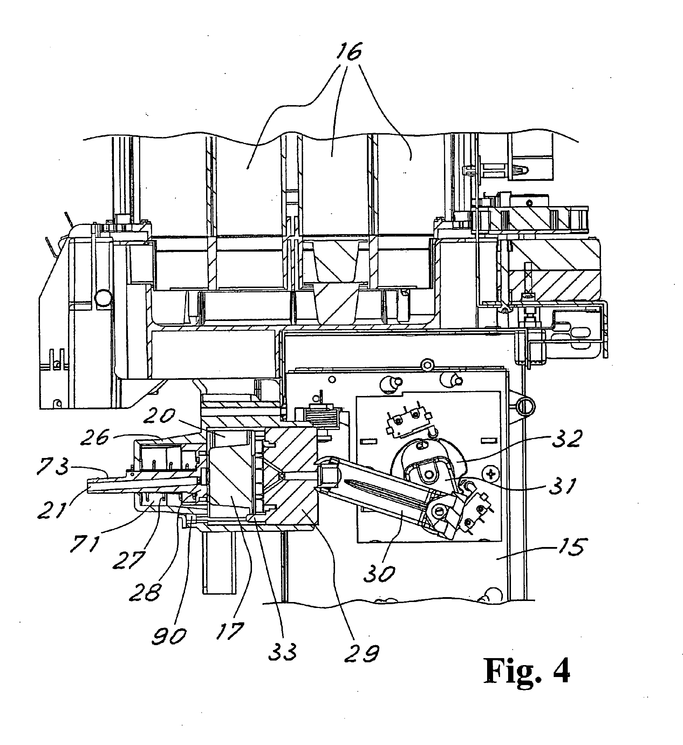

The channel 20 conveys the capsules 17 from the feeding means 13 to an infusion station 14, comprising two jaws 28, 29, clearly shown in figures 4-6.

The jaw 28 is mobile in a sliding manner inside a guide cavity 71, formed inside a body 26 which is fixedly connected to the fixed frame 15 of the device.

The jaw 29 is slidingly mobile inside a guide cavity 72.

The guide cavities 71, 72 communicate with the channel 20 with respective openings, arranged facing on to opposite sides of the channel.

The jaws 28, 29 can slide in a direction transverse to the extension of the channel 20, preferably in an almost horizontal direction.

The jaw 28 is pushed by a spring in the direction of the jaw 29, through the spring 27, acting between the bottom wall of the cavity 71 and the jaw 28. An end stop 41 is mounted on the jaw 28 so that, when the spring is not compressed under the action of the jaw 29, the jaw 28 is arranged almost flush with the inner wall of the channel 20, without interfering with the capsules transiting in the channel.

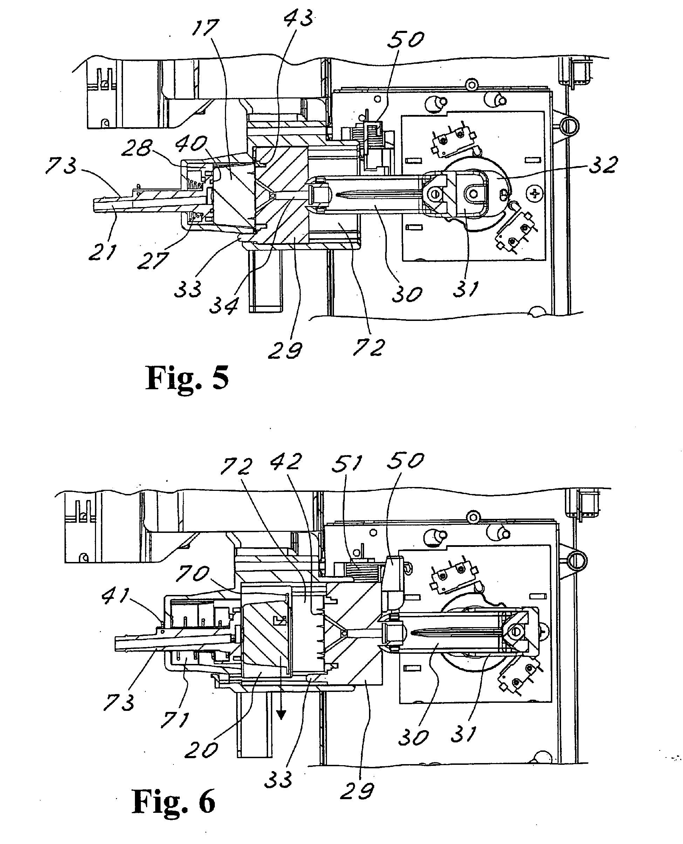

The jaw 29 is connected to motor means 32 which are suitable for moving the jaw between a standby position of the capsule 17 (figure 4) and an operative infusion position in which the jaw 29 is pressed against the jaw 28 with the capsule 17 between them (figure 5).

In the standby position, the jaw 29 is moved away from the jaw 28 so as to allow a capsule 17 conveyed in the channel 20 to arrive in the space comprised between the two jaws.

Preferably, the jaw 29 is connected to a motor 32 through a rod-crank mechanism 30-31.

In the operative position (fig. 5), the capsule 17 enters into the cavity 71 formed in the body 26, and the jaw 29 presses the perimeter flange 70 of the capsule 17 against an inner wall of the channel 20.

The perimetral flange 70 of the capsule 17 is indeed sized so as to prevent the capsule from entering into the guide cavities 71, 72 of the jaws 28, 29. The flange 70 is for such a purpose wider than the openings of the cavities 71, 72.

Preferably, the jaw 29 comprises an annular gasket 43, suitable for forming a seal between the jaw 29 and the capsule 17.

Preferably, the gasket 43 acts against the annular flange 70, when said flange comes into abutment against the wall of the channel 20 in the operative infusion position of the jaws 28, 29.

The two jaws 28, 29 form flat portions between which the capsule remains interpositioned in the infusion position.

The jaw 29 comprises means for making water, preferably hot water, under pressure, flow through the capsule 17. The means for making the water under pressure flow preferably comprise ducts 34 inside the body of the jaw 29. Such ducts 34 are fed through a flexible tube (not shown) connected to the jaw 29. The flexible tube conveys the water sent by a suitable pump (not shown in the figures) of the device 11.

The jaw 29 is also equipped with means for perforating the capsule 17, which preferably comprise pointed protrusions 42 (indicated in figure 6) arranged inside the perimeter of the gasket 43. The jaw 28 comprises a channel 21 inside it, suitable for evacuating the beverage coming out from the capsule 17.

Advantageously, at its face facing towards the jaw 28, in use, the capsule 17 comprises a weakened portion in a central position, suitable for forming a predetermined path for evacuating the beverage towards the channel 21 of the jaw 28.

The jaw 28 comprises an elongated portion 73, inside of which the portion of channel 21, furthest away from the jaw 29, is formed.

The portion 73 can slide inside a hole formed on the bottom of the cavity 71 for housing the jaw 28, and is equipped with the catch 41, outside of it, which defines the end stop of the jaw 28 under the thrust of the spring 27. The catch 41 acts upon the outside of the wall which forms the bottom of the cavity 71. Preferably, the spring 27 is a coil spring, fitted onto the elongated portion 73.

The device 11 also comprises means for stopping the capsule 17 in position between the two jaws 28, 29, when the jaw 29 is in its standby position (fig. 4).

The means for stopping the capsule 17 comprise at least one element 33 connected to the jaw 29, preferably directly mounted onto the jaw 29. Preferably, the stopping element 33 is integral with the jaw 29, formed as a single piece.

The stopping element 33, preferably, has the shape of a finger that extends outwards from the jaw 29 in a direction parallel to the sliding direction of the jaw 29.

Preferably, the stopping means can comprise two analogous projecting elements 25, 33, as shown in figure 2a.

The stopping elements 25, 33 are arranged at a perimetral edge of the jaw 29, on the side downstream of the jaw 29 with respect to the sliding direction of the capsules inside the channel 20.

In the standby position of the jaw 29 (fig. 4), the stopping elements 25-33 project inwards with respect to the channel 20 so as to interfere with the sliding of the falling capsules 17 in the channel 20, for stopping the capsules in a position comprised between the two jaws 28, 29.

In the operative infusion position, the stopping elements 25, 33 are inserted into respective holes formed in the wall of the channel 20.

The jaw 29 is mobile through the motor means 32 also towards a third discharge position of the capsules 17, represented in figure 6, in which the stopping elements 25, 33 are moved away, at least partially, from the channel 20 so as to allow the capsule 17 to be evacuated, by falling in the channel 20. The capsules can then be gathered in a suitable container downstream of the infusion station 14.

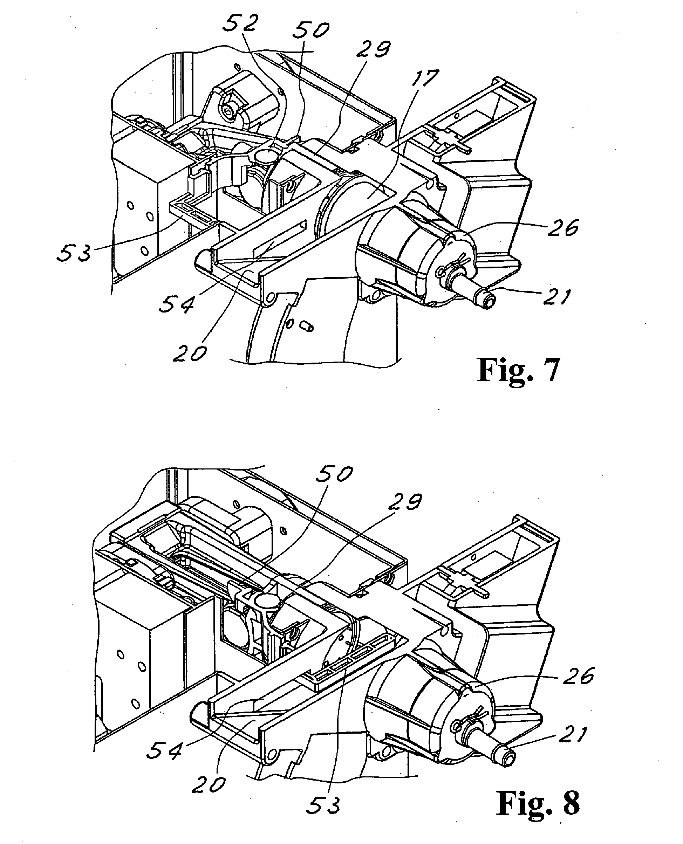

The device 11 also comprises a lever 53 which is mobile between a resting position (fig. 7) and an operative position (fig. 8) in which it pushes the capsule 17 away from the space comprised between the jaws 28, 29.

The lever 53 is pushed by the spring 51 towards the retracted resting position of the channel 20, and it is pushed towards the operative position under the action of the first jaw 29 during the movement of the first jaw 29 towards the third discharge position of figure 6.

In particular, the lever 53 is pushed through the contact of its end 50 with the rear part of the jaw 29 in the final step of the movement towards the discharge position. The lever can rotate around the vertical axis pivot 52, on which the spiral-shaped return spring 51 is fitted.

In the operative position, the lever 53 passes through a slot 54 formed in the side wall of the channel 20 (see fig. 8).

The device 11 is provided with control means, which are able to automatically control the actuation of the various means previously described. The control means also comprise an interface, to receive controls by the user of the machine.

Preferably, along the channel 20 before and after the jaws 28, 29, there can be micro switches intended to verify the actual passing of the capsules in the positions 22 and 23 indicated with the broken line in figure 2a. Depending on the signals provided by these switches, the dispensing of the beverage can be interrupted or activated through the control means of the machine.

Now we shall describe in brief the operation of the device in a beverage production cycle. Initially, following a command given by a user, the feeding means 13 are activated for feeding a capsule into the channel 20. The lever 18 is lowered for an amount of time necessary for a single capsule 17 to slide towards the channel 20.

The jaw 29 is in the standby position (fig. 4) with the stopping elements 25, 33 projecting inside the channel 20 so as to interfere with the sliding movement of the capsule and intercept it in a position between the two jaws 28, 29. The jaw 28 is in the position defined by the catch 41, flush with the inner wall of the channel 20.

When the capsule reaches the position of figure 4, between the jaws 28, 29 in their standby position, the motor 32 is activated, said motor pushes the jaw 29 towards the jaw 28.

The capsule 17 is pushed inside the cavity 71 formed inside the body 26, remaining positioned between the jaw 28 and the jaw 29.

The jaw 29 is pushed against the action of the spring 27 until the flange 70 rests against the inner wall of the channel 20. The operative position, shown in figure 5, is thus reached. In the operative position, the rod and the crank 30, 31 are aligned. The pointed protrusions 42 of the jaw 29 perforate the upper wall of the capsule 17 which forms the flange 70. The gasket 43 forms the seal against the flange 70 of the capsule.

At this point, the pump for sending water under pressure to the ducts 34 of the jaw 29 is thus activated and through the capsule 17, thanks to the presence of the perforations formed on its upper wall. The liquid flows through the capsule and, when it reaches a certain pressure, it causes the capsule itself to open at the central portion of the jaw 28, making the infused fluid flow through the channel 21 out from the device.

Once the infusion is finished, the motor 32 is activated again to bring the jaw 29 away from the jaw 28, until it reaches the discharge position of figure 6. In such a position, the jaw 29 is retracted in the cavity 72, and the stopping means 25, 33 are moved away from the channel 20, so as to allow the capsule 17 to fall and to allow it to be evacuated from the infusion station. The jaw 28, thanks to the action of the spring 27, ensures that the capsule is taken back into the channel 20, outside the body 26, positioned so as to be flush with the inner wall of the channel 20.

In this position of the jaw 29, the lever 53 is activated, which is pushed to rotate on the pivot 52 by engagement of the end 50 with the jaw 29. The lever 53 is inserted into the slot 54 formed in the side wall of the channel 20 and pushes the capsule 17 away from the space comprised between the jaws 28, 29.

The action of the lever 53 reliably ensures that the capsule is evacuated from the space comprised between the two jaws. Indeed, due to the pressure and temperature the capsule undergoes during the infusion, it could also suffer small deformations. In this condition, the capsule could stop and not slide by the force of gravity in the channel 20 away from the jaws, but the action of the lever 53 ensures that it is expelled, allowing a high level of reliability of the device to be obtained. After having verified that the capsule has effectively been expelled, with the suitable micro switch, the jaw 29 is taken back into the initial standby position (fig. 4), ready to intercept a subsequent capsule arriving from the channel 20.

At this point, it should be clear how the purposes of the present invention have been achieved.

In particular, a device for making infused beverages has been provided which has a simple and cost-effective structure, whilst maintaining a high level of reliability.

Indeed, the particular arrangement of the stopping means of the capsule allows the capsule to be intercepted in a reliable manner, in the correct position between the two jaws, without requiring mobile components and additional actuations.

Moreover, the capsule is expelled from the infusion station at the end of the infusion cycle, without having to wait for the subsequent infusion capsule to arrive. This allows the used and wet capsule to avoid having to stay in the infusion station for long periods, thus allowing an adequate level of hygiene to be obtained.

Of course a man skilled in the art, with the purpose of satisfying contingent requirements and specifications, can make numerous modifications and variants to the aforementioned configurations, all in any case covered by the scope of protection of the invention as defined in the following claims.

## Claims

1. Device for making infused beverages suitable for extracting the beverage from a capsule containing the infusion product, comprising:
- means for feeding capsules (13) to a channel (20) suitable for conveying the capsules inside of it by the force of gravity,
- a first (29) and a second jaw (28) mobile with respect to one another in a direction transverse to the channel (20),
- motor means (32) suitable for moving the first jaw (29) between a first standby position, away from the second jaw (28), so as to allow a capsule (17) conveyed by the channel (20) to arrive between the two jaws, and a second operative position wherein the first jaw (29) is pressed against the second jaw (28) with the capsule (17) positioned between the jaws,
- means (33) for stopping the capsules (17) arriving from the channel in a position between the two jaws (28, 29) when the first jaw (29) is in its standby position,
- means (34) for making the infusion liquid flow through the capsule (17) when the first jaw (29) is in the operative position,
said means (33) for stopping the capsule comprising at least one stopping element (25, 33) connected to the first jaw (29) so that, when the first jaw (29) is in the first standby position, the stopping element (33) is positioned to intercept a capsule (17) arriving from the channel (20),
**characterized in that** the first jaw (29) is mobile through said motor means (32) towards a third position for discharging the capsule (17),
and, when the first jaw (29) is brought to the third discharge position, the stopping element (33) is, at least partially, moved away from the channel (20) to allow the capsule (17) to be evacuated.

2. Device according to claim 1, **characterized in that** the at least one stopping element (33) is mounted on the first jaw (29).

3. Device according to one or more of the previous claims, **characterized in that** the first jaw (29) can slide in a respective guide cavity (72) which has an opening which communicates with the channel (20).

4. Device according to one or more of the previous claims, **characterized in that** the second jaw (28) can slide in a respective guide cavity (71) which has an opening that communicates with the channel (20).

5. Device according to one or more of the previous claims, **characterized in that** the second jaw (28) is pushed by a spring towards the first jaw (29), so as to be substantially flush with an inner wall of the channel (20) when the first jaw (29) is in its standby position.

6. Device according to one or more of the previous claims, **characterized in that** the first jaw (29) is equipped with means (42) for perforating the capsule (17).

7. Device according to one or more of the previous claims, **characterized in that** the means for making the infusion liquid flow comprise one or more ducts (34) in the first jaw (29).

8. Device according to one or more of the previous claims, **characterized in that** the second jaw (28) comprises a beverage discharge channel (21).

9. Device according to one or more of the previous claims, **characterized in that** the first jaw (29) comprises a gasket (43) intended to act in use between the jaw and the capsule (17).

10. Device according to one or more of the previous claims, **characterized in that** it comprises a lever (53) mobile between a resting position retracted from the channel (20) and an operative position in which it pushes the capsule (17) away from the space comprised between the jaws (28, 29), said lever (53) being pushed towards the operative position under the action of the first jaw (29) during the movement of the first jaw (29) towards the third discharge position.

11. Unit for preparing infused beverages comprising a device according to one of the previous claims and one or more rigid capsules intended to be passed through by infusion liquid to form the beverage during an operation cycle of the device.

12. Unit according to claim 11, **characterized in that** the capsules comprise a perimeter flange (70) which is sized so as to not enter in the sliding cavities (71, 72) of the two jaws (28, 29).

13. Unit according to one or more of claims 11 to 12, **characterized in that**, in the operative position of the first jaw (28), said annular flange (70) of the capsule (17) comes into abutment against an inner wall of the channel (20).

14. Unit according to one or more of claims 11 to 13, **characterized in that** the capsule (17) is shaped so as to be able to slide inside the channel (20) with an orientation imposed by a shape engagement of the capsule in the channel, with the axis of the capsule transverse to the extension of the channel.

## Patentansprüche

1. Vorrichtung zum Zubereiten von Aufgußgetränken, geeignet für die Extraktion eines Getränks aus einer das Aufgußprodukt enthaltenden Kapsel, umfassend:
- Mittel für die Zufuhr von Kapseln (13) in einen Kanal (20), geeignet zum Fördern der Kapseln in demselben mittels Schwerkraft,
- eine erste (29) und eine zweite (28) Klaue, die relativ zueinander in einer quer zum Kanal (20) verlaufenden Richtung beweglich sind,
- Motormittel (32), geeignet zum Bewegen der ersten Klaue (29) zwischen einer ersten von der zweiten Klaue (28) entfernten Warteposition, um es zu erlauben, daß eine mittels des Kanals (20) beförderte Kapsel (17) zwischen die beiden Klauen gelangen kann, und einer zweiten Betriebsposition, in welcher die erste Klaue (29) gegen die zweite Klaue (28) gedrückt wird, wenn die Kapsel (17) zwischen den Klauen positioniert ist,
- Mittel (33) zum Stoppen der aus dem Kanal kommenden Kapseln (17) in einer Position zwischen den beiden Klauen (28, 29), wenn die erste Klaue (29) in ihrer Warteposition ist, und
- Mittel (34), um die Aufgußflüssigkeit durch die Kapsel (17) fließen zu lassen, wenn die erste Klaue (29) in der Betriebsposition ist, wobei die Mittel (33) zum Stoppen der Kapsel wenigstens ein Stoppelement (25, 33) umfassen, das mit der ersten Klaue (29) so verbunden ist, daß, wenn die erste Klaue (29) in der ersten Warteposition ist, das Stoppelement (33) dazu positioniert ist, eine vom Kanal (20) kommende Kapsel (17) aufzufangen,
**dadurch gekennzeichnet, daß** die erste Klaue (29) mittels der Motormittel (32) in Richtung auf eine dritte Position zum Auswerfen der Kapsel (17) beweglich ist und daß das Stoppelement (33), wenn die erste Klaue (29) in die dritte Auswurfposition gebracht wird, wenigstens teilweise vom Kanal (20) wegbewegt wird, um der Kapsel (17) zu erlauben, ausgeworfen zu werden.

2. Vorrichtung nach Anspruch 1, **dadurch gekennzeichnet, daß** das wenigstens eine Stoppelement (33) auf der ersten Klaue (29) angebracht ist.

3. Vorrichtung nach einem oder mehreren der vorhergehenden Ansprüche, **dadurch gekennzeichnet, daß** die erste Klaue (29) in einer zugehörige Führungsnut (72) mit einer mit dem Kanal (20) in Verbindung stehenden Öffnung gleiten kann.

4. Vorrichtung nach einem oder mehreren der vorhergehenden Ansprüche, **dadurch gekennzeichnet, daß** die zweite Klaue (28) in einer zugehörigen Führungsnut (71) mit einer mit dem Kanal (20) in Verbindung stehenden Öffnung gleiten kann.

5. Vorrichtung nach einem oder mehreren der vorhergehenden Ansprüche, **dadurch gekennzeichnet, daß** die zweite Klaue (28) mittels einer Feder in Richtung der ersten Klaue (29) gedrückt wird, um im wesentlichen bündig mit einer inneren Wand des Kanals (20) zu sein, wenn die erste Klaue (29) in ihrer Warteposition ist.

6. Vorrichtung nach einem oder mehreren der vorhergehenden Ansprüche, **dadurch gekennzeichnet, daß** die erste Klaue (29) mit Mitteln (42) zum Durchstechen der Kapsel (17) versehen ist.

7. Vorrichtung nach einem oder mehreren der vorhergehenden Ansprüche, **dadurch gekennzeichnet, daß** die Mittel zum Fördern der Aufgußflüssigkeit einen oder mehrere Durchgänge (34) in der ersten Klaue (29) umfassen.

8. Vorrichtung nach einem oder mehreren der vorhergehenden Ansprüche, **dadurch gekennzeichnet, daß** die zweite Klaue (28) einen Getränkeauslaufkanal (21) umfaßt.

9. Vorrichtung nach einem oder mehreren der vorhergehenden Ansprüche, **dadurch gekennzeichnet, daß** die erste Klaue (29) eine Dichtung (43) umfaßt, die dazu bestimmt ist, im Betrieb zwischen der Klaue und der Kapsel (17) zu wirken.

10. Vorrichtung nach einem oder mehreren der vorhergehenden Ansprüche, **dadurch gekennzeichnet, daß** sie einen Hebel (53) umfaßt, der zwischen einer vom Kanal (20) zurückgezogenen Ruheposition und einer Betriebsposition, in welcher er die Kapsel (17) von dem zwischen den Klauen (28, 29) erfaßten Raum wegdrückt, beweglich ist, wobei der Hebel (53) unter Einwirkung der ersten Klaue (29) während der Bewegung der ersten Klaue (29) in Richtung der dritten Auswurfposition in die Betriebsposition gedrückt wird.

11. Einheit zum Zubereiten von Aufgußgetränken umfassend eine Vorrichtung nach einem der vorhergehenden Ansprüche und eine oder mehrere feste Kapseln, die dazu vorgesehen sind, während eines Betriebszyklus der Vorrichtung von der Aufgußflüssigkeit durchströmt zu werden, um das Getränk zuzubereiten.

12. Einheit nach Anspruch 11 **dadurch gekennzeichnet, daß** die Kapseln einen umlaufenden Flansch (70) umfassen, der so bemaßt ist, daß er nicht in die Führungsnuten (71, 72) der zwei Klauen (28, 29) gelangt.

13. Einheit nach einem oder mehreren der Ansprüche 11 bis 12, **dadurch gekennzeichnet, daß**, in der Betriebsposition der ersten Klaue (29), der umlaufende Flansch (70) der Kapsel (17) gegen die innere Wand des Kanals (20) in Anlage kommt.

14. Einheit nach einem oder mehreren der Ansprüche 11 bis 13, **dadurch gekennzeichnet, daß** die Kapsel (17) derart geformt ist, daß sie in dem Kanal (20) mit einer Orientierung, die sich durch Formschluß der Kapsel im Kanal ergibt, und mit der Achse der Kapsel quer zur Erstreckungsrichtung des Kanals verlaufend gleiten kann.

## Revendications

1. Dispositif de préparation de boissons infusées apte à extraire la boisson d'une capsule contenant le produit d'infusion, comprenant :
- des moyens d'amenée de capsules (13) à un canal (20) apte à transporter lesdites capsules dans son intérieur par gravité,
- une première (29) et une deuxième (28) mâchoires qui sont mobiles l'une par rapport à l'autre suivant une direction transversale au canal (20),
- des moyens moteurs (32) aptes à déplacer ladite première mâchoire (29) entre une première position d'attente éloignée de ladite deuxième mâchoire (28) afin de permettre à une capsule (17) transportée par le canal (20) de venir entre les deux mâchoires, et une deuxième position opérationnelle dans laquelle ladite première mâchoire (29) est plaquée contre ladite deuxième mâchoire (28), avec la capsule (17) positionnée entre les mâchoires,
- des moyens (33) pour arrêter les capsules (17) venant en provenance du canal, dans une position entre les deux mâchoires (28, 29) lorsque la première mâchoire (29) se trouve dans sa position d'attente, et
- des moyens (34) pour faire s'écouler le liquide d'infusion à travers ladite capsule (17) lorsque ladite première mâchoire (29) se trouve dans la position opérationnelle, lesdits moyens (33) pour arrêter la capsule comprenant au moins un élément d'arrêt (25, 33) qui est replié à ladite première mâchoire (29) de manière à ce que, lorsque ladite première mâchoire (29) se trouve dans la première position d'attente, ledit élément d'arrêt (33) soit positionné pour saisir une capsule (17) venant en provenance du canal (20),
**caractérisé par le fait que** ladite première mâchoire (29) est mobile, par l'intermédiaire desdits moyens moteurs (32), vers une troisième position de déchargement de la capsule (17) et que, lorsque ladite première mâchoire (29) est déplacée dans ladite troisième position de déchargement, ledit élément d'arrêt (33) est, au moins en partie, déplacé dans la direction opposée au canal (20) afin de permettre à ladite capsule (17) d'être évacuée.

2. Dispositif selon la revendication 1, **caractérisé par le fait que** ledit au moins un élément d'arrêt (33) est monté sur ladite première mâchoire (29).

3. Dispositif selon l'une ou plusieurs des revendications précédentes, **caractérisé par le fait que** ladite première mâchoire (29) peut coulisser dans une rainure de guidage associée (72) qui présente une ouverture laquelle est en communication avec ledit canal (20).

4. Dispositif selon l'une ou plusieurs des revendications précédentes, **caractérisé par le fait que** ladite deuxième mâchoire (28) peut coulisser dans une rainure de guidage associée (71) qui présente une ouverture laquelle est en communication avec ledit canal (20).

5. Dispositif selon l'une ou plusieurs des revendications précédentes, **caractérisé par le fait que** ladite deuxième mâchoire (28) est poussée par un ressort en direction de ladite première mâchoire (29) de manière à être pour l'essentiel à fleur d'une paroi intérieure dudit canal (20) lorsque ladite première mâchoire (29) se trouve dans sa position d'attente.

6. Dispositif selon l'une ou plusieurs des revendications précédentes, **caractérisé par le fait que** ladite première mâchoire (29) est munie de moyens (42) à perforer ladite capsule (17).

7. Dispositif selon l'une ou plusieurs des revendications précédentes, **caractérisé par le fait que** lesdites moyens de transport du liquide d'infusion comprennent un ou plusieurs conduits (34) dans ladite première mâchoire (29).

8. Dispositif selon l'une ou plusieurs des revendications précédentes, **caractérisé par le fait que** ladite deuxième mâchoire (28) comprend un canal d'évacuation de boisson (21).

9. Dispositif selon l'une ou plusieurs des revendications précédentes, **caractérisé par le fait que** ladite première mâchoire (29) comprend un joint d'étanchéité (43) qui est destiné à agir en fonctionnement entre la mâchoire et la capsule (17).

10. Dispositif selon l'une ou plusieurs des revendications précédentes, **caractérisé par le fait qu'**il comprend un levier (53) qui est mobile entre une position de repos rétractée du canal (20) et une position opérationnelle dans laquelle il pousse la capsule (17) dans la direction opposée à l'espace compris entre les mâchoires (28, 29), ledit levier (53) étant poussé vers la position opérationnelle sous l'effet de la première mâchoire (29) durant le mouvement de la première mâchoire (29) en direction de la troisième position de déchargement.

11. Unité de préparation de boissons infusées, comprenant un dispositif selon l'une quelconque des revendications précédentes ainsi qu'une ou plusieurs capsules rigides destinées à être traversées, durant un cycle opérationnel du dispositif, par le liquide d'infusion de manière à préparer la boisson.

12. Unité selon la revendication 11, **caractérisée par le fait que** les capsules comprennent un flasque périphérique (70) dimensionné de manière à ne pas entrer dans les rainures de guidage (71, 72) des deux mâchoires (28, 29).

13. Unité selon l'une ou plusieurs des revendications 11 à 12, **caractérisée par le fait que**, dans la position opérationnelle de la première mâchoire (29), ledit flasque périphérique (70) de la capsule (17) vient en appui sur la paroi intérieure du canal (20).

14. Unité selon l'une ou plusieurs des revendications 11 à 13, **caractérisée par le fait que** ladite capsule (17) est configurée de manière à être apte à coulisser à l'intérieur du canal (20) avec une orientation imposée par un engagement positif de la capsule dans le canal, avec l'axe de la capsule transversal à l'extension du canal.
